# EUROPEAN PATENT APPLICATION

(11) **EP 3 654 350 A1**
(43) Date of publication of application: **20.05.2020**
(21) Application number: 17847735.2
(22) Date of filing: 11.07.2017
(51) Int. Cl.: G21C 17/022

(54) **METHOD FOR CONTROLLING THE RATE OF CORROSION OF COOLANT LOOP EQUIPMENT IN NUCLEAR POWER PLANTS**

(71) Applicant: Joint-Stock Company Scientific Research and Design Institute for Energy Technologies Atomproekt, St.Petersburg 197183 (RU)
(72) Inventor: KRITSKIY, Vladimir Georgievich, St.Petersburg 197082 (RU); PROKHOROV, Nikolay Aleksandrovich, St.Petersburg 196657 (RU); NIKOLAEV, Fedor Vladimirovich, St.Petersburg 195256 (RU); STYAZHKIN, Pavel Semenovich, St.Petersburg 195267 (RU); PINEZHSKIY, Stanislav Olegovich, St.Petersburg 193231 (RU); ATAMANOVA, Natal'ya Andreevna, St.Petersburg 195269 (RU)
(74) Representative: Friese Goeden Patentanwälte PartGmbB
(86) International application number: PCT/RU2017/000472
(87) International publication number: WO 2019/013661

(57) **Abstract**

A method of corrosion rate control of nuclear power plants process circuits equipment, whereby the electrochemical potential of the structural material of heat exchanging tubes and the specific electrical conductivity of blowdown water in steam generators are measured, the polarization resistance of the structural material of the pipelines of the condensate-feeding path and the specific electrical conductivity of feed water in steam generators are measured, and these parameters are automatically averaged and compared with the rated values. The electrochemical potential and the specific electrical conductivity of blowdown water from steam generators are displayed as points on a two-parameter nomogram with the coordinates of "electrochemical potential and specific electrical conductivity of the H-cationated sample" of blowdown water divided into areas A, B, D, and F which determine various degrees of corrosion activity in relation to the material of heat exchanging tubes of the blowdown water in steam generators in accordance with the operating conditions. The values of the polarization resistance and the specific electrical conductivity of feed water from steam generators are displayed as points on a two-parameter nomogram with the coordinates of "polarization resistance and specific electrical conductivity of the H-cationated sample" of feed water divided into areas G, Y, X, and Z which determine various degrees of corrosion activity in relation to the material of pipelines of the feed water circuit in steam generators in accordance with the operating conditions. Depending on the location of the point in one of the areas of the two-parameter nomograms, no actions are taken, or coolant parameters are adjusted, or the power unit is shut down.

## Description

### TECHNICAL FIELD

The invention relates to nuclear power engineering, in particular, to reliability management of the equipment in process circuit condensate-feeding and steam paths, specifically, to improvement of the working medium corrosion activity management, and can be used during operation of nuclear power plants (NPPs) with equipment of low-alloy perlitic and chrome-nickel austenitic steels.

### BACKGROUND OF THE INVENTION

Nuclear power plants relate to highly technical, complex and hazardous facilities. Special care shall be taken in relation to ensuring reliable operation of the equipment in process circuits condensate-feeding and steam paths. The walls of pipelines and process circuit equipment serving as physical barriers, as well as both technical and organizational measures taken to protect the barriers and to maintain their efficiency, are designed to ensure reliable operation of a nuclear power plant (refer to NP-001-15 "General Safety Provisions for Nuclear Power Plants" at https://www.seogan.ru/np-001-15). The walls of heat exchange tubes of steam generators serve as safety barriers in the secondary coolant circuit of power units with water-cooled water-moderated power reactors (VVER type reactors) or pressurized water reactors (PWRs). Heat exchange tubes of steam generators and secondary circuit heaters are made of chrome-nickel austenitic steels prone to stress corrosion cracking when exposed to tensile stresses and the corrosive medium containing a certain amount of activating agents (strong acid anions) and oxygen. Secondary circuit steam lines and pipelines are made of strong perlitic and low-alloy steels, which are exposed to the working medium, including the mechanism of corrosion wear. The corrosion wear rate of the secondary circuit steam lines and pipeline elements depends on the composition of steels (chromium, copper, molybdenum content) and on the working medium characteristics (linear flow rate, pH value, concentration of impurities and corrosion inhibitors). The products of corrosion of the secondary circuit equipment and pipelines enter the steam generators together with feed water and are deposited on the heat transfer surfaces of the tubes. The concentration of iron corrosion products in feed water affects the intensity of formation of iron oxide deposits in steam generators during operation and, consequently, the reliability of this equipment. (refer to "Erosion-Corrosion Outflow of Iron-Containing Compounds: Source of Deposits in Steam Generators of NPPs with VVER Type Reactors" (2011) by G.V. Tomarov, A.A. Shipkov // Heat Power Engineering, No. 3, pp. 55-61). The nuclear power engineering development trend represents reduction of the repair lead time, extension of the overhaul life and the total operating lifetime of power units. Under these circumstances, the need to ensure the desired reliability of equipment is solicited (refer to NP-096-15 "Requirements to Resource Management of Equipment and Pipelines of Nuclear Power Plants. General Provisions" at https://www.seogan.ru/np-096-15). Experience in the operation of secondary circuits of VVER type reactors suggests that concentration of impurities and corrosion products causing changes in the corrosion activity of the medium occurs in the steam generators. Corrosion products and impurities are mainly accumulated on the surfaces with a high heat flow and in stagnant hydrodynamic areas. Basic characteristics of the secondary circuit water chemistry shall be determined in the condensate-feeding path (CFP). All impurities forming the working medium enter the condensate-feeding path. These are components of condenser cooling water (salt impurities, carbonates, bicarbonates and oxygen); salt impurities in the solutions of corrosion inhibitors (hydrazine, ammonia, ethanolamine); makeup water containing salt impurities, oxygen, carbon dioxide and neutral organochlorine substances; air inflows through poorly sealed parts of the low-pressure cylinder equipment (oxygen and carbon dioxide). At modern nuclear power plants, the cooling water inflows amount to 0.00001 wt. % of the steam flow to the condensers. Quantitatively, these are all very low values. Therefore, when operating modern power units with dense condensers (with tubing of low-pressure condensers made of stainless steels or titanium alloys), the flow of turbine condensate through the filters of the turbine condensate purification system may be reduced. Considering that salt and iron-oxide impurities change into the vapor phase in limited quantities, the outflow of impurities from the secondary circuit working medium (products of salt and iron corrosion) in steam generators takes place in the form of deposits on heat transfer surfaces and on the filters of the blowdown water purification system. Due to the non-linear effect of thermophysical processes in the steam generators on the impurities of the working medium, an unfavorable ratio of salt impurities in feed water and high values of the specific electrical conductivity æ_{H} can be used based on the blowdown water parameters.

A method of estimation of corrosion resistance and, accordingly, equipment reliability is disclosed (refer to RD EO 1.1.2.11.0571-2015 "Standard Permissible Wall Thickness of Pipeline Elements Made of Carbon Steels During Erosion-Corrosion Wear" at http://www.snti.ru/snips rd3.htm), whereby the condition of equipment walls shall be evaluated during the power units shutdown period. Thickness and continuity of the equipment walls shall be measured using ultrasonic inspection methods and electromagnetic properties, together with the surface electrical and magnetic conductivity. The measured wall thickness value (s_{wall}) for pipeline elements made of carbon steel with uniform and local erosion-corrosion wear shall not be less than the standard value [s] under the following inequality: s_{wall}≥[s].

Disadvantages of the disclosed equipment reliability monitoring method include impossibility of the monitoring and, thus, of controlling the corrosion rate during between repairs.

A method of water quality control for a nuclear power plant is disclosed (refer to Patent No. US5398269, IPC G01C 19/307, C01D 01/00, G01C 03/0, published on March 14, 1995), including reactor water sampling, measurement of the pH level of the reactor water at room temperature, measurement of iron concentration in feed water, measurement of hydrogen concentration in the reactor water, maintenance of iron concentration in feed water below 0.05 ppb by increasing the degree of iron removal in the turbine condensate purification system, maintenance of the pH level of the reactor water determined at room temperature below 6.8 by injection into the reactor water of substance forming acidic ions with water, for example, carbon dioxide or nitrogen gas or nitrous oxide, and maintenance of the dissolved oxygen concentration in the reactor water below 20 ppb by injecting hydrogen into the primary circuit, whereby the ion concentration of ⁶⁰Co in the primary circuit is preserved for a long time

A disadvantage of the disclosed method is the use of carbon dioxide to maintain the pH level of the reactor water. In the secondary circuit of NPPs with VVER or PWR reactors, carbon dioxide is an undesirable impurity due to the binding of alkaline agents specifically proportioned to be injected into the circuit to increase the pH level and to minimize the rate of corrosion. In addition, partially soluble carbonates of iron, cobalt, calcium and magnesium hydroxides may form in the condensate-feeding path.

A method of reducing the corrosion of structural materials of a nuclear reactor is disclosed (refer to Patent No. US8295426, IPC G21C 09/00, G21C 19/307, G21D 01/00, published October 23, 2012), whereby during the nuclear reactor shutdown period a solution or a suspended mixture of the substance generating excitation current under the conditions of the nuclear reactor is injected into reactor water, and this substance is settled, for example, TiO₂, ZrO₂, ZnO, WO₃, PbO, BaTiO₃, Bi₂O₃, SrTiO₃, Fe₂O₃, FeTiO₃, KTaO₃, MnTiO₃, SnO₂, Nb₂O₅, on the surface of structural materials in the amount of 10-200 µg/cm². Hydrogen is injected into the reactor water while maintaining the hydrogen concentration in feed water within (0.2-1.0) ppb, thereby controlling the electrochemical potential (ECP or Eₕ) of the reactor water within the range from -0.4 V up to -0.1 V relative to the standard hydrogen electrode (SHE).

A disadvantage of the disclosed method of reducing the corrosion of structural materials of a nuclear reactor is the possibility to control the corrosion rate only of alloys of fuel-element claddings and the equipment of stainless steels in the boiling-water reactor and only by dosing the reducing agent (i.e. hydrogen) which limits the possibilities of the method.

A method of management of the oxygen content in the process circuit of a nuclear power plant is disclosed (refer to Application CN104090592, IPC C02F 01/20, G05D 11/00, G21C 19/307, published on October 8, 2014), including formation of a system of sequentially connected degassing and control tanks, a pump and a process coolant circuit, pump feeding of feed water treated with inert gas to the process coolant circuit, provided that blowdown with inert gas is continued until the measured oxygen content in the degassing tank is less than 1 vol. %). A hydrazine solution is injected during start-up in the calculated amount to manage the oxygen content in process circuit water. The hydrazine flow rate is adjusted based on the measurements of the oxygen content in the process circuit water so that the oxygen concentration in the process circuit water is less than 0.1 mg/kg.

A disadvantage of the disclosed method is its availability only for boiling-water reactors (BWR) and lack of a deaerator in its condensate-feeding path limiting its use.

A method of pipeline corrosion monitoring is disclosed (refer to Application RU2009117712, IPC G01N17/00, published on November 20, 2010), whereby information on the basic technical and operational parameters of pipeline systems, on the parameters of corrosive media transported through pipelines, on the statistics of the fault rate of the pipeline system and on the technical diagnostics of the pipeline system is collected. A process flow chart of the pipeline system shall be simulated using all of the collected information above; operational stresses of the pipeline of the given system shall be determined using the created process flow chart model. Then, the corrosion rate of the pipeline is calculated and the hydrodynamics of the pipeline products transport is determined using the specific operational stresses of the pipeline and the pipeline route profile; the calculated corrosion rate of the pipeline is confirmed using laboratory methods. Pipeline sections are ranked according to the corrosion rate risk levels with the use of the results of laboratory methods. Corrosion control units are located in corrosive sections of the pipelines using the predetermined risk levels, and the number of such corrosion control units depends both on the number of such corrosive sections and on their length. Corrosion measurement tools are selected with the knowledge of the type of corrosion, the rate of development of corrosion defects and the hydrodynamics of pipeline products transport; pipeline corrosion monitoring devices are used depending on the corrosion measurement tools. A report on measurements of the pipeline corrosion rate and corrosion activity of the medium is drawn indicating measuring intervals with the use of pipeline monitoring devices and corrosion measurement tools. Parameters of the medium are measured on the basis of the measurement report; the measured medium parameters are synchronized with the unified real-time clock system. Continuous monitoring of pipeline corrosion is conducted with the above technical measurement tools.

The disclosed method of transport to another facility requires an additional development of a model of corrosion processes and verification thereof on a case-by-case basis. In addition, this method is limited only to corrosion monitoring and does not provide for the corrosion rate control or issuing of recommendations for corrosion rate control based on the analysis. The disclosed method does not regulate the chemistry during pipeline operation and, therefore, there are no means to maintain it within the specified limits.

A method of corrosion rate control of the equipment of process circuits of nuclear power plants, specifically those with carbon-uranium nuclear reactors, is disclosed, which coincides with this engineering solution in the maximum number of essential features, and is taken as the prototype (refer to Patent RU2486613, IPC G21C11/00, published on June 27, 2013). The method is implemented by measuring the values of the electrochemical potential at the operating temperature and the specific electrical conductivity at the room temperature, by automatically averaging the measured parameters and comparing them with the normalized values, by displaying the electrochemical potential and the specific electrical conductivity values in the form of points on a two-parameter nomogram with the coordinates of "stainless steel potential - specific electrical conductivity", divided into areas A, B and C, defining various degrees of corrosion activity of the coolant in accordance with the operation conditions. Following the qualitative assessment of the water chemistry, actions are taken to optimize the rate of corrosion: when the points are located: - in area A, no action is taken; - in area B, the coolant parameters are adjusted within the specified period of time by controlling the deaerators to reduce the concentration of oxygen in feed water and to reduce the specific electrical conductivity in the (feed and blowdown) water purification systems, standby filters with fresh or regenerated resins are connected, and used filters are led out for regeneration, - in area C, the power unit is shut down.

A disadvantage of the prototype method is that only measurements of the electrochemical potential of stainless steel in blowdown water and assessment of the possibility for pitting under the transient conditions or for cracks regrowth are not sufficient to effectively control the corrosion rate of the secondary circuits condensate-feeding path pipeline at NPPs with VVER and PWR reactors. The prototype method does not take into account the impact on reliability of the condensate-feeding path equipment and pipelines of the concentration of iron corrosion products therein entering the steam generators and affecting, during operation, the intensity of formation of surface deposits on heat exchanging tubes that are nonlinearly related to the thermal load.

### INVENTION DISCLOSURE

The objective of this engineering solution is to develop such a corrosion rate control method that would ensure an improvement of the efficiency of the control of the corrosion rate of structural materials for the condensate-feeding path and improvement of the reliability during operation of nuclear power plants process circuits equipment and, above all, of steam generators.

This objective is achieved by the fact that the method of corrosion rate control for the equipment of process circuits of nuclear power plants includes measurement of the electrochemical potential and coolant specific electrical conductivity values, automatic averaging of these parameters and comparing them with the normalized values, displaying the values of the electrochemical potential and the specific electrical conductivity on the monitor screen mnemonic diagram as points on a two-parameter nomogram with the coordinates of "electrochemical potential - specific electrical conductivity", qualitative assessment of the water chemistry and implementation of actions aimed at the corrosion rate control. A new development in this method is measurement of the electrochemical potential at the operating temperature and measurement of the specific electrical conductivity of an H-cationated sample of blowdown water from steam generators. At the same time, values of the polarization resistance at the operating temperature and the specific electrical conductivity of an H-cationated sample of feed water from steam generators are measured. The values of the electrochemical potential (Eₕ) and the specific electrical conductivity (æ_{Hb}) of the H-cationated sample of blowdown water from steam generators are displayed as points on a two-parameter nomogram with the coordinates of "Eₕ - æ_{Hb}" divided into areas A, B, D, and F which determine various degrees of corrosion activity of blowdown water in steam generators in accordance with the operating conditions. The values of the polarization resistance (Rₚ) and the specific electrical conductivity (æ_{Hf}) of the H-cationated sample of feed water from steam generators are displayed as points on a two-parameter nomogram with the coordinates of "Rp - æ_{Hf}" divided into areas G, Y, X, and Z which determine various degrees of corrosion activity of the feed water in steam generators in accordance with the operating conditions. When the points are located in areas A and G, no action is taken. When the points are located in areas A and Y, the parameters of blowdown water in steam generators shall be adjusted within the specified period of time. Areas A and G correspond to the corrosion state of the equipment with quality characteristics of the water chemistry ensuring reliable and safe operation of the process circuits of the nuclear power plant. Areas B, D and F for blowdown water, and Y, X and Z for feed water correspond to the areas of action levels to be carried out upon reaching the specified values of concentration of the rated impurities in the working medium according to STO 1.1.1.03.004.0979-2014 "Water Chemistry of the Secondary Circuit during Nuclear Power Plant Unit Commissioning under AES-2006 Project. Quality Standards of the Working Medium and Supporting Tools" issued by OJSC Rosenergoatom Concern (http://www.snti.ru/snips_rd3.htm). When the points are located in areas B and Y, the parameters of feed water in steam generators shall be adjusted within the specified period of time. When the points are located in areas D or F and X or Z, the causes for deviations in such parameters shall be determined and eliminated, and, if impossible, the power unit shall be shut down for compensatory measures.

When the points are located in areas A and Y, the parameters of blowdown water in steam generators can be adjusted by increasing its flow rate by (0.5-1.0) wt. % of steam capacity, and by determining and eliminating the causes for an increase in the specific electrical conductivity æ_{Hb}.

When the points are located in areas B and Y, the parameters of feed water in steam generators can be adjusted by increasing the flow through the filters of the turbine condensate purification system, while changing the flow rate of corrosion inhibitors and that of blowdown water.

Hydrazine solution and/or ammonia solution and/or a solution of organic amines may be injected as corrosion inhibitors.

When the points are located in areas D or F and X or Z during power unit shutdown, compensatory measures may include technical examination, repair or replacement of the equipment.

This corrosion rate control method is based on an integrated assessment of the working medium by means of a joint analysis of the position of points with (Eₕ, æ_{Hb}) and (Rp, æ_{Hf}) coordinates on both nomograms.

This method, unlike the prototype, controls the rate of corrosion of the secondary circuit of NPPs with VVER and PWR reactors, and uses the following integrated electrochemical indicators to assess the quality of the water chemistry and to control the rate of corrosion: the electrochemical potential (Eₕ) in blowdown water and the polarization resistance (Rₚ) in feed water. Feed and blowdown waters in steam generators are characterized by various drive mechanisms of corrosion of structural materials. When assessing the quality of the water chemistry and issuing recommendations for corrosion rate control, the nomograms "Rₚ - æ_{Hf}" for feed water and "Eₕ - æ_{Hb}" for blowdown water shall be shared.

### BRIEF DESCRIPTION OF THE DRAWINGS

This method is illustrated by the drawings, where:
Fig. 1 shows a two-parameter nomogram with the coordinates of
   "Eₕ - æ_{Hb}" for blowdown water in steam generators;
Fig. 2 shows a two-parameter nomogram with the coordinates of "Rₚ - æ_{Hf}" for feed water in steam generators;
Fig. 3 shows a two-parameter nomogram with the coordinates of "Rₚ - æ_{Hf}" for feed water in steam generators for the first corrosion rate control option;
Fig. 4 shows a two-parameter nomogram with the coordinates of
   "Eₕ - æ_{Hb}" for blowdown water in steam generators for the first corrosion rate control option;
Fig. 5 shows a two-parameter nomogram with the coordinates of "Rₚ - æ_{Hf}" for feed water in steam generators for the second corrosion rate control option;
Fig. 6 shows a two-parameter nomogram with the coordinates of
   "Eₕ - æ_{Hb}" for blowdown water in steam generators for the second corrosion rate control option.

### THE BEST EMBODIMENT OF THE INVENTION

Within the scope of this invention, the method for corrosion rate control of the equipment of process circuits of nuclear power plants is implemented as follows: the working medium is supplied automatically from the standard sampling points (upstream of the filters of the steam generator blowdown water purification system and downstream of the group of high pressure feed water heaters) into the pulse tubes to the cells of the sensors measuring Eₕ of blowdown water and Rₚ of feed water. At the same time, the working medium enters the cooler and, at room temperature, passes through the cells of the sensors of the primary circuit automatic chemical monitoring system (ACMS): feed water passes downstream of the group of high pressure heaters through the cells of the sensors measuring the specific electrical conductivity of H-cationated sample, pHf and hydrazine concentration (N₂H₄); blowdown water passes from the steam generators through the cells of the sensors measuring the specific electrical conductivity of H-cationated sample, pH_{b} and concentration of sodium ([Na]), chloride ([Cl]), and sulfate ([SO₄]) ions. The sensor signals are sent to the secondary converters, and then, in the adjusted form, to the computer to calculate the values of the above parameters. In this case, the following is carried out: averaging of the measured values of electrochemical potentials, polarization resistance and other automatic chemical monitoring parameters (æ_{Hf}, pH_{f}, [N₂H₄], æ_{Hb}, pH_{b}, [Na], [Cl], [SO₄]); recalculation of the measured values of potentials of the main electrodes into units of the standard hydrogen electrode (SHE); development of still frames of the following nomograms: "Rp and the specific electrical conductivity of the H-cationated sample" for feed water and "electrochemical potential and specific electrical conductivity of the H-cationated sample" for blowdown water. Effective information support of the operator during the equipment corrosion condition assessment and when making a decision with regard to the corrosion rate control shall be based on a combination of direct measurements in the most important circuit flows (feed and blowdown water) with the results of calculations for the physical and chemical models of circuit distribution of the concentrations of working medium impurities and issue of recommendations for possible options depending on the location of the points with "Rₚ - æ_{Hf}" for feed water and "Eₕ - æ_{Hb}" for blowdown water on the nomograms. When the points are located in areas A and G, no action is taken. When the points are located in areas A and Y, the parameters of blowdown water in steam generators shall be adjusted within the specified period of time. When the points are located in areas B and Y, the parameters of feed water in steam generators shall be adjusted within the specified period of time. When the points are located in areas D or F and X or Z, the causes for deviations in such parameters shall be determined and eliminated, and, if impossible, the power unit shall be shut down for compensatory measures.

The rate of corrosion of structural materials with the points referring to the corrosion activity of the working medium located beyond areas A and G is controlled as follows: changing of the concentrations of inhibitors by adjusting the flow rate of the latter into the feed water; changing of the working medium flow rate through the filters of the turbine condensate purification system in case of a leakage in the condenser group; changing og the blowdown rate of steam generators; changing, as necessary, of the planned dates for washing, decontamination and technical examination of steam generators.

In particular, when the points are located in areas A and Y, the parameters of blowdown water in steam generators are adjusted by increasing its flow rate by (0.5-1.0) wt. % of steam capacity, and by determining and eliminating the causes for an increase in the specific electrical conductivity æ_{Hb}.

When the points are located in areas B and Y, the parameters of feed water in steam generators are adjusted by increasing the flow through the filters of the turbine condensate purification system, while changing the flow rate of corrosion inhibitors and that of blowdown water. Hydrazine solution and/or ammonia solution and/or a solution of organic amines are injected as corrosion inhibitors.

When the points are located in areas D or F and X or Z during power unit shutdown, compensatory measures include technical examination, repair or replacement of the equipment.

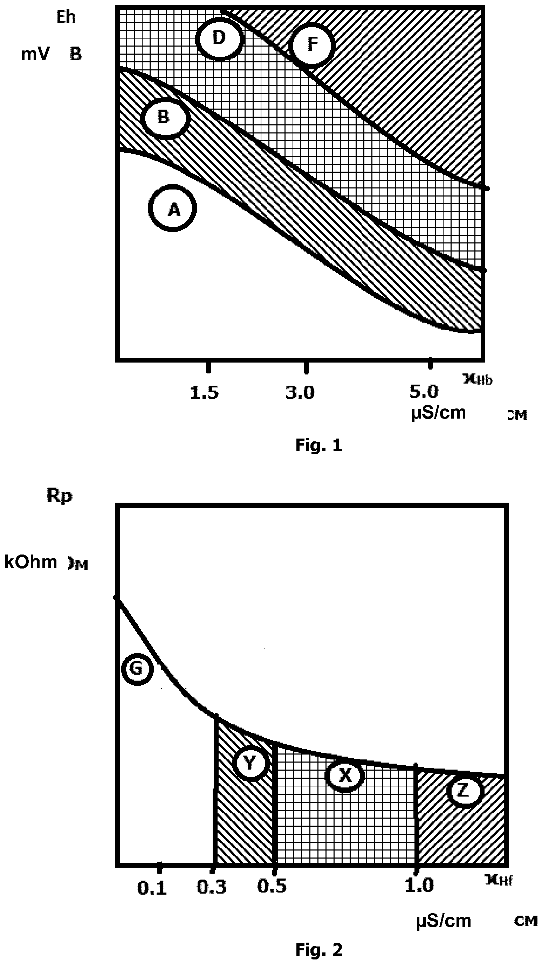

This method of corrosion rate control of the equipment in process circuits of nuclear power plants enables the operator to visually assess the location of points corresponding to the current state with respect to the boundaries of the areas with various degrees of corrosion activity of feed and blowdown water. Taking into account the nonlinear nature of the boundaries (Fig. 1, Fig. 2), such a visual assessment contributes, in case of deviations and violations, to determination of the shortest distance from the point to the boundary of the area with low corrosion activity (required impact vector). Using vector projections on the axis of both nomograms (primarily, æ_{Hf} and æ_{Hb}), it is possible to obtain the values of the minimum required changes in the controlled parameters to reduce the corrosion activity of the working medium. Maintenance organization, sampling, installation of sensors, converters, fittings, electrical grids and signal cables of the automatic chemical monitoring system are carried out at the power units of nuclear power installations according to the relevant technical documentation. The data shall be recorded on a computer, calculated, archived and communicated to operators using custom designed software.

Parameters of feed water, to a greater extent, refer to the iron concentration values. At higher values of æ_{Hf} and lower values of Rₚ, iron removal and, thus, its concentration are higher. This may occur due to the lack of an inhibitor (hydrazine, ammonia, organic amine), an increased content of strong acid anions and carbonates or due to an unfavorable ratio of the listed components (more often, in case of a change in the power unit capacity). Parameters of blowdown water mainly refer to the concentration of salts in the immediate vicinity of the heat exchanging tubes. The more positive the Eₕ value and the higher the æ_{Hb} value, the more salt impurities are retained in the iron oxide deposits on the heat exchanging tubes, the higher the activity of the working medium in steam generators and the higher the possibility of pitting and subsequent stress corrosion cracking of the heat exchanging tubes.

Certain examples demonstrating the efficiency of this method when operating a VVER-1200 NPP while implementing the procedure for water chemistry quality evaluation according to this method are given below.

### INDUSTRIAL APPLICABILITY

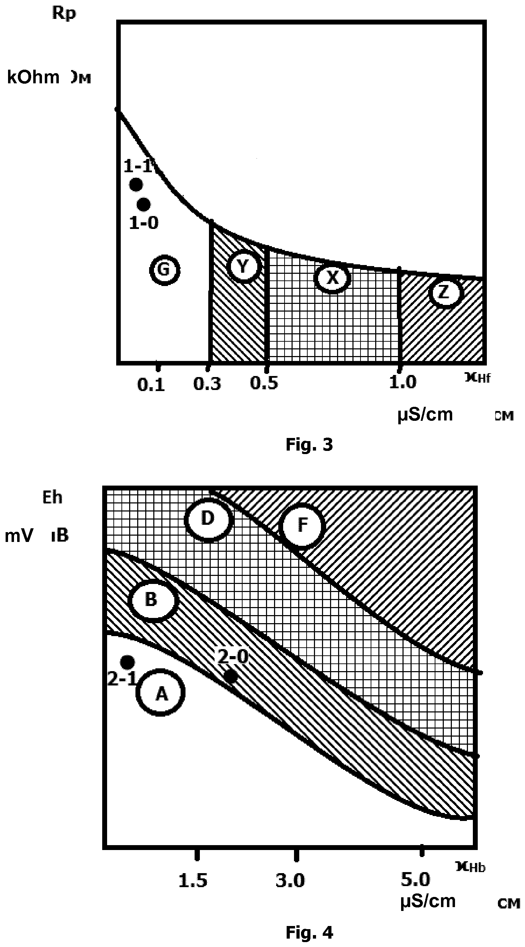

Example 1. Fig. 3 and Fig. 4 show the nomograms for feed and blowdown water during power operation of the power unit with VVER-1200. Operating conditions are as follows: the condensate flow through the filters of the turbine condensate purification system is approximately 10 wt. % of the steam flow through condensers, i.e. 340 t/h; the design cooling water leak through poorly sealed parts of the condenser group is 10⁻⁵ wt. % of the steam flow through condensers, i.e. 0.32 kg/h; the concentration of chlorides in cooling water is 5259 mg/dm³, the concentration of sulfates is 530 mg/dm³ and, accordingly, the intake of salt impurities in the form of anions of strong acids into the secondary circuit is 1687 mg/h for chlorides and 170 mg/h for sulfates; the total blowdown of steam generators is at the minimum level and amounts to approximately 0.5 wt. % of the steam capacity, i.e. 30 t/h. The injection of corrosion inhibitors is compliant with the requirements of STO 1.1.1.03.004.0979-2014 "Water Chemistry of the Secondary Circuit during of the Nuclear Power Plant Unit Commissioning under AES-2006 Project. Quality Standards of the Working Medium and Supporting Tools" issued by OJSC Rosenergoatom Concern (http://www.snti.ru/snips_rd3.htm). The inhibitors are ammonia (25% aqueous solution), hydrazine and ethanolamine. Fig. 3 shows a two-parameter nomogram with the coordinates of "polarization resistance and specific electrical conductivity æ_{Hf} of the H-cationated sample" for feed water. The point (1-0) with coordinates (Rₚ, æ_{Hf}) is located in area G and represents a high quality of feed water, in particular, it demonstrates that the concentration of anions of strong acids is very small: 1.11 µg/kg for chlorides, 0.14 µg/kg for sulfates, the specific electrical conductivity of the H-cationated sample, æ_{Hf} = 0.069 µS/cm (the value of the specific electrical conductivity of theoretically pure water is 0.055 µS/cm). A two-parameter nomogram with the coordinates of "electrochemical potential and specific electrical conductivity of the H-cationated sample" for blowdown water of steam generators for the case under consideration is shown in Fig. 4. The point (2-0) with coordinates (Eh, æHb) is located in area B due to the fact that as a result of evaporation that took place in salt compartments of steam generators, the concentration of chlorides reached approximately 128 µg/kg and that of sulphates reached 20 µg/kg. The value of æ_{Hb} amounts to 1.78 µS/cm. Considering that the volume of cooling water coming from the environment through the poorly sealed parts of the equipment (suction devices) and, accordingly, the concentration of salt impurities in the turbine condensate are insignificant, the increase in the flow of the working medium through the filters of the purification system is undesirable. The working medium, including the condensate, contains reagents, i.e. corrosion inhibitors, ammonia and ethanolamine, concentrations of which exceed the content of salt impurities by more than a thousand times. The filters of the purification system absorb all the impurities and, primarily, the corrosion inhibitors. As a result: the working capacity of the filters is reduced, and more ammonia and ethanolamine must be added to the working medium to maintain the required quality of the water chemistry. Under these circumstances, it is more expedient to increase the blowdown rate of steam generators from 0.5 wt. % of the total steam capacity of steam generators to approximately 1 wt. %, i.e. from 30 t/h to 64 t/h. After increasing the blowdown water flow rate up to 64 t/h, the location of points on the nomograms changed. The point with (Rₚ, æ_{Hf}) coordinates moved to the position (1-1) on the nomogram shown on Fig. 3. At the same time, the concentration of chlorides changed to 0.51 µg/kg and that of sulfates changed to 0.08 µg/kg, æ_{Hf} became 0.062 µS/cm. The point with (Eₕ, æ_{Hb}) coordinates moved to the position (2-1) in the green area on the nomogram shown on Fig. 4. At the same time, the concentration of chlorides changed to 32.7 µg/kg and that of sulfates changed to 5.18 µg/kg, æ_{Hf} became 0.49 µS/cm. Taking into account the high concentration of chlorides in the "salt compartments" (≥30 µg/kg), the following compensatory action is recommended. When the power during the transient modes is reduced, the blowdown flow rate to the filters of the blowdown water purification system shall be increased to the design maximum value (140 t/h) to remove the salt impurities passing under these conditions from the deposits to the steam generators, and to minimize the possibility of pitting corrosion defects on heat exchanging tubes.

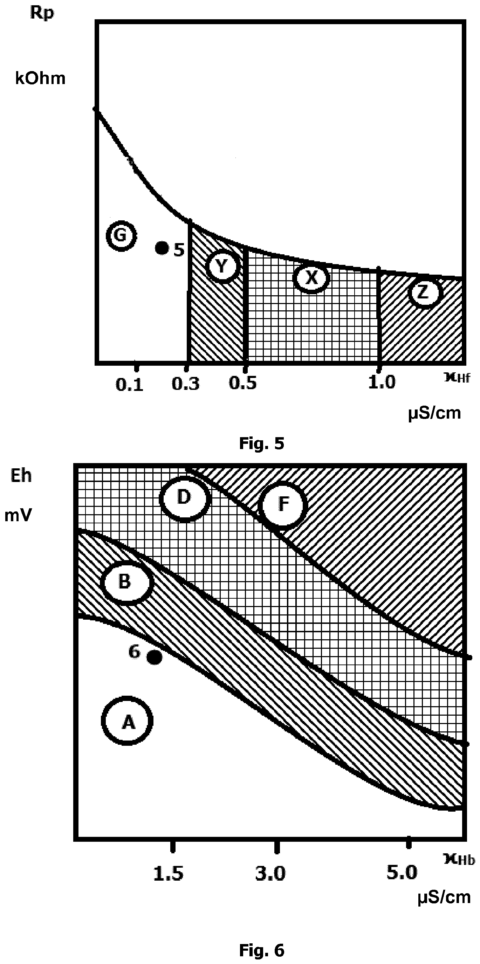

Example 2. Fig. 5 and Fig. 6 show the nomograms for feed and blowdown water during power operation of the power unit with VVER-1200. Operating conditions are as follows: the condensate flow through the filters of the turbine condensate purification system is approximately 10 wt. % of the steam flow through condensers, i.e. 340 t/h; the design cooling water leak through poorly sealed parts of the condenser group is 10⁻⁵ wt. % of the steam flow through condensers, i.e. 0.32 kg/h; the concentration of chlorides in cooling water is 3143 mg/dm³, the concentration of sulfates is 363 mg/dm³ and, accordingly, the intake of salt impurities in the form of anions of strong acids into the secondary circuit is1008 mg/h for chlorides and 117 mg/h for sulfates; the total blowdown of steam generators is at the minimum level and amounts to approximately 1 wt. % of the steam capacity, i.e. 64 t/h. The injection of corrosion inhibitors is compliant with the requirements of STO 1.1.1.03.004.0979-2014 "Water Chemistry of the Secondary Circuit during of the Nuclear Power Plant Unit Commissioning under AES-2006 Project. Quality Standards of the Working Medium and Supporting Tools" issued by OJSC Rosenergoatom Concern (http://www.snti.ru/snips_rd3.htm). The inhibitors are ammonia (25% aqueous solution), hydrazine and ethanolamine. Fig. 5 shows a two-parameter nomogram with the coordinates of "polarization resistance and specific electrical conductivity æ_{Hf} of the H-cationated sample" for feed water. Point 5 with (Rₚ, æ_{Hf}) coordinates characterizing the corrosion activity of feed water is located in the area between G and Y in the immediate vicinity of area Y. The concentrations of strong acid anions are very small: 0.31 µg/kg of chlorides and 0.06 µg/kg of sulfates, the specific electrical conductivity value æ_{Hf} of the H-cationated sample is 0.22 µS/cm. A two-parameter nomogram with the coordinates of "electrochemical potential and specific electrical conductivity æ_{Hb} of the H-cationated sample" for blowdown water of steam generators for the case under consideration is shown on the nomogram in Fig. 6. Point 6 with (Eₕ, æ_{Hb}) coordinates is partially located in area A adjacent to area B. The controlled parameters of blowdown water of "salt compartments" of steam generators are as follows: the concentration of chlorides is 19.7 µg/kg, the concentration of sulfates is 4.2 µg/kg. The value of æ_{Hb} amounts to 1.15 µS/cm. Theoretical calculation of the specific electrical conductivity values of the H-cationated sample with due account for controlled anions, chlorides and sulfates only, provides the following values: 0.059 µS/cm for æ_{Hf} and 0.28 µS/cm for æ_{Hb}. It is quite clear that the process circuit working medium contains uncontrolled salt impurities. It is most likely that these impurities contain fluorides or carbonates of various origins. Carbon dioxide can enter the circuit: from the air in the suction devices of the vacuum part of the turbine; during the thermolysis of both organic amines and neutral organic impurities that are not retained by the filters of the water treatment systems. Carbon dioxide is neutralized with alkaline corrosion inhibitors, so it is not removed from the deaerators. Recommended actions: increase of the flow rate through purification systems up to the maximum available values; improvement of the pressurization of the turbine equipment; improvement of water treatment systems; isolation of makeup water storage tanks, as well as planning of the extended technical examination of the circuit equipment and pipelines in order to determine the areas with corrosion wear exceeding the rated values.

Thus, the use of this method in practice will allow to actually increase the efficiency of evaluation of the corrosion activity of the coolant in the process circuit of the power unit of a nuclear power plant and, accordingly, to increase the reliability of operation of the equipment of process circuits of nuclear power plants and, mainly, steam generators, by means of timely compensatory measures. In addition, the reliability of determination of the period between inspections increases, which allows to justify its increase and/or the scope of technical examination of various sections of the condensate-feeding path and steam generators while ensuring the level of reliability and safety during operation of the nuclear power plant established by the project.

## Claims

1. A method of corrosion rate control of nuclear power plant process circuit equipment by using the measurement results related to the values of the electrochemical potential and the specific electrical conductivity of the aqueous medium, automatically averaging of these parameters and comparing them with the rated values, displaying of the values of the electrochemical potential and the specific electrical conductivity on the mnemonic diagram on the monitor screen in the form of points on a two-parameter nomogram with the coordinates of "electrochemical potential and specific electrical conductivity", quality assessment of the water chemistry and performance of actions aimed at the corrosion rate control, *wherein* electrochemical potential and specific electrical conductivity of blowdown water from steam generators, as well as polarization resistance and specific electrical conductivity of feed water from steam generators are measured; the electrochemical potential and the specific electrical conductivity of blowdown water from steam generators are displayed in the form of points on a two-parameter nomogram with the coordinates of "electrochemical potential and specific electrical conductivity of the H-cationated sample" of blowdown water divided into areas A, B, D, F which determine various degrees of corrosion activity of blowdown water from steam generators in accordance with the operating conditions; the polarization resistance and the specific electrical conductivity of feed water from steam generators are displayed in the form of points on a two-parameter nomogram with the coordinates of "polarization resistance and specific electric conductivity of the H-cationated sample" of feed water divided into areas G, Y, X, Z which determine various degrees of corrosion activity of feed water from steam generators in accordance with the operating conditions; when the points are located in areas A and G, no action is taken; when the points are located in areas A and Y, the parameters of blowdown water in steam generators are adjusted within the specified period of time; when the points are located in areas B and Y, the parameters of feed water in steam generators are adjusted within the specified period of time; when the points are located in areas D or F and X or Z, the causes for deviations in such parameters shall be determined and eliminated, and, if impossible, the power unit shall be shut down for compensatory measures.

2. The method as defined in claim 1, wherein when the points are located in areas A and Y, the parameters of blowdown water of steam generators are adjusted by increasing its flow rate by (0.5-1.0) wt. % of steam capacity, and by determining and eliminating the causes for an increase in the specific electrical conductivity æ_{Hb}.

3. The method as defined in claim 1, wherein when the points are located in areas B and Y, the parameters of feed water in steam generators are adjusted by increasing the flow through the filters of the turbine condensate purification system, while changing the flow rate of corrosion inhibitors and that of blowdown water.

4. The method as defined in claim 3, wherein hydrazine solution and/or ammonia solution and/or a solution of organic amines are used as corrosion inhibitors.

5. The method as defined in claim 1, wherein when the points are located in areas D or F and X or Z during power unit shutdown, compensatory measures include technical examination, repair or replacement of the equipment.
